Europäisches Patentamt

European Patent Office

Office européen des brevets

(19)

(11) Publication number: **0 171 513**
**B1**

(12) **EUROPEAN PATENT SPECIFICATION**

(45) Date of publication of patent specification: **13.09.89**

(21) Application number: **85105574.9**

(22) Date of filing: **07.05.85**

(51) Int. Cl.⁴: **C 08 L 23/02, C 08 L 23/06, C 08 L 23/08, C 08 K 3/26**

(54) **Polyolefin compositions having improved impact strength.**

(30) Priority: **16.08.84 US 641213**

(43) Date of publication of application:
**19.02.86 Bulletin 86/08**

(45) Publication of the grant of the patent:
**13.09.89 Bulletin 89/37**

(84) Designated Contracting States:
**BE DE FR GB NL**

(56) References cited:
**EP-A-0 000 726**
**EP-A-0 007 639**
**EP-A-0 028 085**

The file contains technical information
submitted after the application was filed and
not included in this specification

(73) Proprietor: **QUANTUM CHEMICAL CORPORATION (a Virginia corp.)**
**99 Park Avenue**
**New York, NY 10016 (US)**

(72) Inventor: **Krigas, Thomas Michael**
**319 West Victoria Lane**
**Arlington Heights, Ill. 60004 (US)**
Inventor: **Shida, Mitsuzo**
**68 Timber Lake Drive**
**Barrington, Ill 60010 (US)**
Inventor: **Machonis, John, Jr.**
**18 Dartford Lane**
**Schaumburg Ill. 60194 (US)**
Inventor: **Zeitlin, Robert Jay**
**1025 Sterling Avenue**
**Palatine, Ill. 60067 (US)**

(74) Representative: **Schmidt-Evers, Jürgen, Dipl.-Ing. et al**
**Patentanwälte Dipl.-Ing. H. Mitscherlich Dipl.-Ing. K. Gunschmann Dipl.-Ing. Dr.rer.nat. W. Körber Dipl.-Ing. J. Schmidt-Evers Dipl.-Ing. W. Melzer Postfach 26 01 32**
**D-8000 München 26 (DE)**

# EP 0 171 513 B1

**Description**

Background of the invention
Field of the invention

This invention relates generally to the field of polyolefin compositions and, more particularly, this invention relates to polyolefin compositions containing inorganic fillers which have high impact strength.

Description of the prior art

Inorganic fillers, such as Group IIa metal carbonates, may be used to modify the solid-state mechanical properties of polyolefins, such as by increasing the stiffness, by increasing the upper use temperature, and by improving the dimensional stability of finished products. Economies resulting from replacement of polyolefin by less costly fillers are often additional considerations. Although prior inorganic filler-polyolefin compositions exhibit high part rigidity compared to the unfilled polymers, the impact and tensile strengths of such materials are reduced by the presence of the filler.

Compatibilizing agents have been incorporated into prior filler-polyolefin compositions to improve their properties. Previous attempts to compatibilize Group IIa metal carbonates in such compositions have centered on the use of low molecular weight additives such as stearic acid, fatty acid salts, organic borates (see U.S. Patent No. 4,073,766, for example), phosphonic acids and phosphonic acid esters (see U.S. Patent No. 4,098,758), organofunctional silanes, and the like.

Organofunctional silane treatment of Group IIa metal carbonates does little to improve the physical properties of polymer compositions. The other above-identified additives often are used to coat carbonates to aid in dispersion and to reduce viscosity. They may also increase the elongation at break and the impact strength. However, the impact improvement is not as large as would be desirable and the tensile strength may actually decrease.

It is known that the addition of certain third components, such as an elastomer or plasticizer, to Group IIa metal carbonate-polyolefin composites can increase the impact strength and tensile elongation of highly filled resins. The use of polyethylene oxide is described by B. M. Badran et al., *J. Appl. Polym. Sci.,* Vol. 27, at 3669 (1982). These methods detrimentally affect stiffness and tensile strength.

Polyolefins grafted with carboxylic cids or anhydrides have been used as compatibilizers for some inorganic filler-polyolefin compositions. Wu et al U.S. Patent No. 3,873,643 (March 25, 1975) further discloses that these graft copolymers retain good tensile strength and elongation even when highly filled. However, these grafted copolymers are soft and relatively expensive to use when compared to ungrafted polyolefins.

Summary of the invention

It is an object of the present invention to overcome one or more of the problems described above.

In accordance with the invention, Group IIa metal carbonate filled-polyolefin compositions are provided with a compatibilizing agent to improve impact strength and tensile strength while maintaining stiffness. The compatibilizing agent comprises one or more polyolefins grafted with ethylenically unsaturated carboxylic acids, acid anhydrides or derivatives thereof. The Group IIa metal carbonate filler may be present in amounts up to 80 wt.% based on the total weight of the composite. The graft copolymer compatibilizer should be present in amounts ranging from 1 wt.% to 50 wt.% based on the weight of the carbonate filler. The compositions of the present invention have increased rigidity compared to unfilled polyolefins and also improved impact strength and tensile strength properties compared to prior Group IIa metal carbonate filled-polyolefins with compatibilizers.

Surprisingly, small amounts of these grafted copolymers, when blended into polyolefins in the presence of filler, cause large increases in impact strength. When the graft copolymer concentration is increased beyond a small amount, the impact strength levels off or is reduced while the stiffness drops rapidly. These effects were not anticipated, taught or disclosed by Wu et al U.S. Patent No. 3,873,643.

Other objects and advantages of the invention will be apparent to those skilled in the art from a review of the following detailed description taken in conjunction with the appended claims.

It deserves to be pointed out, however, that the improvement aimed at of the polyolefin mixtures is effected even if the mixtures have been produced without using a "nucleating agent"—such as one or more of metal salts of carboxylic acids or dibenzylidene sorbitol—, which is regarded as necessary by Inoue et al (U.S. patent 4,338,228 resp. EP 0028085 A1). In addition, mixtures which differ from each other only in the exchange of the filler—that is, they contain, for example, talc instead of calcium carbonate—have less favorable properties.

Detailed description of the invention

Inorganic fillers have been used with polyolefins to increase the stiffness of finished products. Usually, increased stiffness is obtained at the expensive of decreased impact strength and tensile strength. According to the present invention, Group IIa metal carbonate fillers are blended with one or more polyolefins and one or more polyolefins grafted with ethylenically unsaturated carboxylic acids, acid anhydrides or derivatives thereof as compatibilizers. It has been found that the presence of a relatively small amount of the compatibilizer results in a product which retains stiffness and has increased tensile and impact strengths compared to the uncompatibilized product or previous compatibilized products.

The term "polyolefin" as used herein with respect to the unfilled polymer (or matrix resin) includes homopolymers and copolymers of ethylene, propylene, butenes and other unsaturated olefinic hydrocarbons.

The term "polyolefin" as used herein with respect to the compatibilizer refers to the backbone polymer which is grafted with a suitable monomer. Such backbone polymers include homopolymers and copolymers of ethylene, propylene, butenes and other unsaturated olefinic hydrocarbons. Especially preferable in this invention are linear ethylene homopolymers or copolymers.

The polyethylenes in both cases preferably have a density of between 0.910 and 0.965 g/ml. The density is preferably at least 0.940; a high density is generally preferred because of the resulting stiffness of the product.

Although the use of high density polyolefin matrix resins and graft copolymer backbones is preferred, lower density polyolefins, such as low density polyethylene (LDPE) or linear low density polyethylene (LLDPE—a copolymer of ethylene and a 1-olefin) may be used if desired for particular applications, although stiffness generally decreases with decreases in density.

The invention is effective independent of the type of matrix resin used. Density and stiffness both increase with increases in the concentration of filler. Increases in the proportion of compatibilizer result in a slight decrease in stiffness.

The backbone of the graft copolymers includes homopolymers of ethylene and copolymers of ethylene with up to 40 wt.% of such higher olefins as propylene, 1-butene and 1-hexene and may contain di- or triolefins as are used commercially in ethylene - propylene terpolymers such as ethylidene - norbornene, methylenenorbornene, 1,4 - hexadiene and vinylnorbornene. Also, it is preferable sometimes to graft blends of two or more of the above homopolymers, copolymers and terpolymers. While the above polymers are useful in preferred embodiments of the invention, they should not be regarded as limiting in any way.

The unsaturated carboxylic acids or acid anhydrides used as the grafting monomers include compounds such as fumaric acid, maleic acid, maleic anhydride, 4 - methyl cyclohex - 4 - ene - 1,2 - dicarboxylic acid anhydride, bicyclo(2.2.2)oct - 5 - ene - 2,3 - dicarboxylic acid anhydride, 1,2,3,4,5,8,9,10 - octahydronaphthalene - 2,3 - dicarboxylic acid anhydride, 2 - oxa - 1,3 - diketospiro(4.4)non - 7 - ene, bicyclo(2.2.1)hept - 5 - ene - 2,3 - dicarboxylic acid anhydride, maleopimaric acid, tetrahydrophthalic anhydride, x - methylbicyclo(2.2.1)hept - 5 - ene - 2,3 - dicarboxylic acid anhydride and other fused ring monomers described in U.S. Patent Nos. 3,873,643 and 3,882,194, both of which are assigned to the assignee hereof.

Cografting monomers as described in U.S. Patent 3,882,194 are also useful for preparing graft copolymers useful in the invention.

Included among the conjugated unsaturated esters suitable for cografting are dialkyl maleates, dialkyl fumarates, dialkyl itaconates, dialkyl mesaconates, dialkyl citraconates, alkyl acrylates, alkyl crotonates, alkyl tiglates and alkyl methacrylates where "alkyl" represents aliphatic, aryl-aliphatic and cycloaliphatic groups containing 1—12 carbon atoms. Esters particularly useful in the cografted copolymers of this invention are dibutyl maleate, diethyl fumarate and dimethyl itaconate. Among the acids and acid anhydrides particularly useful in the cografted copolymers of this invention are maleic anhydride, fumaric acid, x - methylbicyclo(2.2.1)hept - 5 - ene - 2,3 - dicarboxylic acid anhydride and bicyclo(2.2.1)hept - 5 - ene - 2,3 - dicarboxylic acid anhydride.

It is often desirable to use more than one monomer in either or both classes of monomers in order to control the physical properties of the final products.

Graft copolymers suitable for use in this invention may be made by any suitable means, including the methods disclosed in Wu et al U.S. Patent No. 3,873,643, and U.S. Patent No. 3,882,194.

Graft or cograft copolymers useful as the compatibilizers of this invention generally comprise 70—99.999 wt.% of polyolefin backbone and 30—0.001 wt.% of the unsaturated carboxylic acid and/or carboxylic acid anhydride or mixtures. Especially preferred are graft or cograft copolymers comprising 70—99.5 wt.% or polyolefin backbone and, correspondingly, 30—0.5 wt.% of the unsaturated carboxylic acid and/or carboxylic acid anhydride or mixtures.

The Group IIa metal carbonate filler may be present in amounts up to 80 wt.% of the total weight of the composition. Preferably, the filler should not be present in amounts greater than 50 wt.% of the composition. The graft copolymer should be present in amounts ranging from 1 wt.% to 50 wt.% of the weight of the filler, and very preferably no more than 25 wt.% of the weight of the filler.

Stiffnesses above certain desired values are unattainable without a relatively high proportion of filler, and the invention finds its greatest utility in such compositions.

The tensile impact strength of the inventive compositions tend to peak as the percentage of compatibilizer is increased. Beyond this peak value little improvement in tensile impact strength is made by increasing the proportion of compatibilizer in the compositions. Further increases in compatibilizer content will decrease the stiffness and increase the product cost while having at best only a marginal beneficial effect on tensile impact strength.

The Group IIa metal carbonate particle size is selected as an optimization process. Small particles,

3

below about one µm, result in higher tensile impact strengths in the filled product, but the stiffness suffers and more compatibilizer is needed. If larger particles are used, better stiffness is obtained and lower amounts of compatibilizer are required (for a lower composite cost), but the tensile impact strength peaks at a lower value. The amount of compatibilizer required to reach a given impact range is proportional to the filler concentration. Particle size should then be selected according to an optimization of desired tensile impact strength, stiffness, and cost of the product.

The composite material can be assembled by a number of techniques in which the graft copolymer comes into direct contact with the filler particles. The filler may be precontacted with the graft copolymer either in solution with mixing and subsequent evaporation of the solvent, or by melting the compatibilizer with mixing in the presence of the filler. Then the coated filler can be melt compounded into the matrix polymer. It is also possible to melt blend the compatibilizer in the matrix polymer and then incorporate the filler.

The compositions of this invention can be prepared by using a high shear mixing device such as a two roll mill, an intensive mixer (e.g. Banbury), single or twin screw extruders, kneaders or other suitable mixers. The preferred method is to combine all constituents, i.e., polyolefin, filler and compatibilizer, in either a twin-screw extruder or intensive mixer and work the mixture (for a few minutes) to achieve a substantially homogeneous composition in which all polymeric components are in the molten state.

Precompounding of the three components at higher filler loadings than the intended final use concentrations (i.e., in a masterbatch) can then be used with additional matrix polyolefin in a second compounding or extrusion to meet the desired final composition.

Other ingredients can also be added to the compositions of the present invention in order to improve processing, chemical or physical properties. Among these are antioxidants, heat and UV stabilizers, antistatic agents, foaming agents, flame retardant agents and coloring pigments which are widely used. However, the compositions of the present invention are prepared without using a nucleating agent as described by Inoue et al (EP 0028085 A1).

The filler is preferably dispersed substantially uniformly throughout the blend. Also, it is preferred that the polyolefin matrix resin be non-elastomeric in nature. The blend is preferably homogeneous and, although microphases may be present in the blend, it is highly preferable that macrophase behavior be avoided.

Articles of use made from the thermoplastic compositions of this invention can be produced by suitable methods of extrusion and/or molding and forming techniques known to those skilled in the art. Among these methods are blow molding, injection molding, rotational molding, sheet and film extrusion, pipe extrusion, thermofoaming, lamination and extrusion coating.

The composites of the present invention are thermoplastic in nature, and therefore, can be recycled after processing.

Although we do not wish to be held to the following mechanism, it is felt that the excellent stiffness-strength balance obtained in molded or extruded articles is achieved because very few polar groups are required to form a physical-chemical interaction with the filler. The remainder of the graft copolymer is a long chain polyolefin having a structure similar to that of the matrix polymer. This permits good dispersion to be developed and maintained in the molten polymer state and permits the olefin portion of the graft molecules to participate in the solid structure of matrix polymer providing the reinforcement effect.

Examples

The following Examples illustrate the compositions of the invention and the methods by which they are made, but are not to be considered as limiting the scope of the invention.

Examples 1—3

To a Brabender Plasticorder mixer maintained at 204°C are charged 40 parts by weight $CaCO_3$ (Huber H-White which is a ground product with a median particle diameter of 2.5 µm), 55 parts by weight high density polyethylene and 5 parts by weight of XMNA graft copolymer. The polyethylene matrix resin is Chemplex Product No. 6009, a 0.85 g/10 min melt index resin with a density of 0.96 g/ml in powder form. XMNA graft copolymer is made by reacting x - methylbicyclo(2.2.1)hept - 5 - ene - 2,3 - dicarboxylic acid anhydride (XMNA) with a high density polyethylene homopolymer whose high load melt index is 3 g/10 min and whose density is 0.96 g/ml to give a grafted material containing 1.5 weight percent XMNA and a melt index of 1.5 g/10 min. The composition is mixed for 5 minutes at 120 rpm with a roller blade configuration.

Example 2, a control, was prepared under identical conditions as the composition of Example 1, but no graft copolymer compatibilizer was used (i.e. 40 parts $CaCO_3$ and 60 parts high density polyethylene).

A corresponding unfilled control, Example 3, contained 100 parts of the high density polyethylene (HDPE) and was subjected to the same processing conditions as Example 1.

Compression molded plaques were made and their tensile impact strengths were measured according to ASTM D1822-79 on die cut, type L specimens. The flexural moduli (1% secant modulus) were measured according to ASTM D790-80. The data given in Table I below show the expected boost in flexural modulus for the 40% $CaCO_3$ filled examples over the unfilled control. The impact strength of the filled HDPE without compatibilizer is substantially reduced from the HDPE control without filler. The filled HDPE with compatibilizer retains substantially more of the impact strength of the unfilled HDPE control.

TABLE I
(Examples 1—3)

| Composition | Example No. | Flexural modulus | | Tensile impact | |
|---|---|---|---|---|---|
| | | (kpsi) | Expressed in terms of $N/mm^2$ | (ft.lb./in²) | Expressed in terms of $kJ/m^2$ |
| 40% $CaCO_3$+ compatibilizer | 1 | 320 | 2206 | 71 | 149 |
| 40% $CaCO_3$, no compatibilizer | 2 | 350 | 2413 | 29 | 61 |
| 100% HDPE control | 3 | 217 | 1496 | 93 | 195 |

Examples 4—8

Examples 4—8 illustrate the effect on impact strength of varying the amount of $CaCO_3$ in the composition.

Five compositions were prepared as in Example 1 with the concentration of XMNA graft copolymer fixed at 5 wt.% of the total composition with varying concentrations of $CaCO_3$ and the remainder of the composition being HDPE. Five comparative compositions corresponding to these and varying the amount of $CaCO_3$ but containing no compatibilizer were prepared as in Example 2. The impact strengths and percent improvement of the inventive compositions over the corresponding comparative compositions without the graft copolymer compatibilizer are given in Table II.

TABLE II
(Examples 4—8)

| | | Tensile impact | | | | |
|---|---|---|---|---|---|---|
| | | With 5% compatibilizer | | No compatibilizer | | |
| Example | % $CaCO_3$ | (ft.lb./in²) | Expressed in terms of $kJ/m^2$ | (ft.lb./in²) | Expressed in terms of $kJ/m^2$ | % Improvement |
| 4 | 10 | 79 | 166 | 72 | 151 | 10 |
| 5 | 20 | 81 | 170 | 38 | 80 | 113 |
| 6 | 30 | 83 | 174 | 27 | 57 | 207 |
| 7 | 40 | 68 | 143 | 23 | 48 | 196 |
| 8 | 50 | 60 | 126 | 23 | 48 | 161 |

The following Examples 9—15 illustrate the effect of various low molecular weight agents reported to improve the impact strength of $CaCO_3$-polyolefin compositions.

Examples 9—12

Stearic acid-coated $CaCO_3$ is commercially available from many sources and in various average particle sizes in both ground and precipitated forms which typically contain about 1% stearic acid by weight. It is reported to enhance the compatibility of $CaCO_3$ in polyolefin and to improve the impact strength.

The composition of Example 9 contains 40 parts by weight of a ground uncoated $CaCO_3$ (median particle diameter (d)=1.8 μm), 4 parts by weight of HDPE-based XMNA graft copolymer and 56 parts by weight of HDPE homopolymer. The composition was prepared as in Example 1. Example 10 also contains 40 parts by weight of the ground uncoated $CaCO_3$ with 60 parts of the HDPE, but no graft copolymer. Example 11 is identical to Example 9 except that the $CaCO_3$ is the corresponding stearic acid coated version. Example 12 also contains 40 parts by weight of the stearic acid-coated CaCO$_3$, 60 parts HDPE but no graft copolymer.

Stearic acid contains 0.00352 moles of carboxylic acid per gram of material, where XMNA-HDPE graft copolymer contains only 0.000084 moles of anhydride per gram. The impact strengths of Examples 9—12 are given in Table III, below. The data show that in the absence of compatibilizer the impact strength of the stearic acid-coated CaCO$_3$ composite (Example 12) is slightly higher than that of the composite made with uncoated CaCO$_3$ (Example 10). However, in the presence of the graft copolymer compatibilizer of this invention, the impact strengths of the composites (Examples 9 and 11) are double those of composites without compatibilizer and more than 20 times as effective on a molar basis.

TABLE III
(Examples 9—12)
(40% CaCO$_3$ by weight)

| | Description | | Moles of functional groups per gram of composite | | Tensile impact | |
|---|---|---|---|---|---|---|
| Example | Compatibi- lizer (wt.%) | Stearic acid (wt.%) | Acid | Anhydride | (ft.lb./in$^2$) | Expressed in terms of kJ/m$^2$ |
| 9 | 4 | 0 | 0 | $3.36 \times 10^{-6}$ | 76 | 160 |
| 10 | 0 | 0 | 0 | 0 | 20 | 42 |
| 11 | 4 | ~1% | $3.52 \times 10^{-5}$ | $3.36 \times 10^{-6}$ | 63 | 132 |
| 12 | 0 | ~1% | $3.52 \times 10^{-5}$ | 0 | 32 | 67 |

Examples 13—15

The composition of Example 13 comprises 41 parts of an organosilicone compound coated ground CaCO$_3$ (d=2.5 µm) and 59 parts of HDPE prepared by the method of Example 2. The coating was done by dissolving 5 grams of the organosilicone compound (Union Carbide's Y9602) in 100 ml methanol and 8 ml water with stirring. This solution was added to 100 g CaCO$_3$ with stirring. The mixture was dried in a vacuum oven at 100°C for two hours before blending with the HDPE in a Brabender mixer.

The composition of Example 14 comprises 2 parts by weight of a titanate coupling agent (Kenrich's KRTTS, isopropyl triisostearoyl titanate), 40 parts of ground CaCO$_3$ (d=2.5 µ) and 60 parts HDPE prepared by the method of Example 2. The KRTTS contains 0.00113 moles of reactive groups per gram of material.

The composition of Example 15 comprises 2 parts by weight of an oxidized oil (Chemtall's Dimer C36-18, a 1800 molecular weight, 36 acid number material), 40 parts of ground CaCO$_3$ (d=2.5 µm) and 58 parts of HDPE prepared by the method of Example 2. Dimer C36-18 contains approximately 0.0011 moles of carboxylic acid per gram of material.

The impact strength of Examples 13—15 using the identified commercially-available, conventional treatments are listed in Table IV and compared to Example 1. None of them are as effective as the novel compatibilizer of the invention in enhancing the impact strength of the CaCO$_3$ composition. Even though the graft copolymer is present at 5% by weight versus 1 to 2% of the low molecular weight agents, the graft copolymer contains only 0.000084 moles of anhydride groups per gram of material. Thus, this unique compatibilizer has less than one tenth the number of functional groups per gram as compared to the low molecular weight agents, but shows substantially better impact strength.

TABLE IV
(Examples 13—15)

| Example | Description | Moles of functional groups per gram of composition | Tensile impact | |
|---|---|---|---|---|
| | | | (ft.lb./in$^2$) | Expressed in terms of kJ/m$^2$ |
| 13 | Organosilicone (1%) | (unknown) | 23 | 48 |
| 14 | Titanate KRTTS (2%) | $2.26 \times 10^{-5}$ | 29 | 61 |
| 15 | Oxidized oil (2%) | $2.2 \times 10^{-5}$ | 40 | 84 |
| 1 | XMNA graft copolymer (5%) | $4.2 \times 10^{-6}$ | 71 | 149 |

Examples 16—19

The following Examples 16—19 illustrate the utility of the inventive composition for blow molded articles.

The compositions of Examples 16—19 were prepared in a Stewart Bolling 35 lb mixer (Banbury) at 120 RPM in a 4.5 minute cycle. The composition of Example 16 comprised of 100 parts by weight of the HDPE described in Example 1. The composition of Example 17 comprised 30 parts of ground $CaCO_3$ (d=2.5 µm) and 70 parts of HDPE. The material of Example 18 comprised 5 parts XMNA graft copolymer described in Example 1, 30 parts $CaCO_3$ and 65 parts HDPE. The composition of Example 19 comprised 5 parts XMNA graft copolymer, 40 parts $CaCO_3$ and 55 parts HDPE.

These pelletized compositions were (a) compression molded for physical property tests and (b) blown into 453.6 g (16 oz) "Boston Round" bottles (25 g weight) on an Impco A13 reciprocating screw, blow molding machine. The test properties are given in Table V.

Example 17 shows the brittle behavior of $CaCO_3$-HDPE compositions in the absence of the graft copolymer. With the graft copolymer present (Examples 18 and 19) the objectives of the present invention of increased stiffness and higher heat deflection without sacrificing tensile strength compared to HDPE are achieved. At the same time, the bottle impact strength of the compatibilized composite is four times greater than that of bottles made with $CaCO_3$ and no compatibilizer (Examples 17 and 18).

TABLE V
(Examples 16—19)

| Ingredients | Ex. 16 | Ex. 17 | Ex. 18 | Ex. 19 |
|---|---|---|---|---|
| % HDPE | 100 | 70 | 65 | 55 |
| % $CaCO_3$ | 0 | 30 | 30 | 40 |
| % Graft copolymer | 0 | 0 | 5 | 5 |
| Physical properties | | | | |
| Density (g/ml) | 0.96 | 1.14 | 1.18 | 1.28 |
| Melt index (g/10 min) | 0.44 | 0.52 | 0.39 | 0.32 |
| Flexural modulus | | | | |
| (1% sec×10³ psi) | 218 | 280 | 287 | 332 |
| (expressed in terms of N/mm²) | 1503 | 1930 | 1979 | 2289 |
| Tensile impact | | | | |
| (ft.lb./in²) | 90 | 33 | 83 | 67 |
| (expressed in terms of kJ/m²) | 189 | 69 | 174 | 141 |
| Tensile strength[1] (psi) | 2330 | 3560 | 4540 | 4720 |
| (expressed in terms of N/mm²) | 16 | 24 | 31 | 32 |
| Heat deflection[2] | | | | |
| (°C at 66 psi=4.6 bar) | 79 | 89 | 82 | 92 |
| Bottle drop impact[3] (ft) | 20 | 3 | 12 | 12 |
| (expressed in terms of m) | 6.1 | 0.9 | 3.6 | 3.6 |

[1]ASTM D 638-72 (at break)
[2]ASTM D 648
[3]ASTM D 2463-74

Examples 20—25

The following Examples 20—25 illustrate the effect of using a polypropylene homopolymer, polypropylene copolymer, and low density polyethylene as the matrix polyolefin.

Example 20 shows a composition containing 60 parts of a propylene homopolymer (hercules 6523, melt flow rate of 4.0) and 40 parts of a ground $CaCO_3$ (1.8 µm diameter). Example 21 illustrates a composition containing 50 parts of the polypropylene homopolymer and 40 parts of the $CaCO_3$ of Example 20 plus 10 parts of the HDPE based XMNA graft copolymer. The materials of both Examples were prepared in a Brabender mixer at 204°C (400°F).

Examples 22 and 23 are identical to Examples 20 and 21 except the polypropylene matrix resin used was a copolymer (hercules 7623, a 2.0 melt flow rate, 5% ethylene block copolymer).

Example 24 shows a composition with 60 parts of a low density polyethylene homopolymer (Chemplex 3503 with a 0.925 g/ml density and a melt index of 0.3) and 40 parts of a ground $CaCO_3$ (1.8 μm diameter). The composition of Example 25 contains 50 parts of the low density matrix resin, 40 parts of the $CaCO_3$ (1.8 μm diameter) and 10 parts of a HDPE based XMNA graft copolymer. Both compounds were prepared as in Examples 20 through 23, but at a 177°C (350°F) mixing temperature.

The impact data for the compositions of Examples 20—25 are given in Table VI and demonstrate the reinforcing effect of the novel compatibilizer of this invention with various matrix polyolefins.

TABLE VI
(Examples 20—25)

| Example | Description | Tensile impact | |
|---|---|---|---|
| | | (ft.lb./in²) | Expressed in terms of kJ/m² |
| 20 | 60 parts homopolymer propylene 40 parts $CaCO_3$ | 21 | 44 |
| 21 | 50 parts homopolymer polypropylene 40 parts $CaCO_3$, 10 parts compatibilizer | 48 | 101 |
| 22 | 60 parts copolymer polypropylene 40 parts $CaCO_3$ | 42 | 88 |
| 23 | 50 parts copolymer polypropylene 40 parts $CaCO_3$, 10 parts compatibilizer | 117 | 246 |
| 24 | 60 parts homopolymer low density polyethylene 40 parts $CaCO_3$ | 75 | 158 |
| 25 | 50 parts homopolymer low density polyethylene 40 parts $CaCO_3$, 10 parts compatibilizer | 167 | 351 |

Examples 26 and 27

The following Examples 26 and 27 illustrate the effect of varying the filler type.

The composition of Example 26 contains 40 parts $MgCO_3$, 55 parts of CX 6009 HDPE (described in Example 1) and 5 parts XMNA grafted HDPE described in Example 1. The composite of Example 27 contains 40 parts $BaCO_3$, 55 parts of the above mentioned HDPE and 5 parts of the above identified XMNA grafted HDPE. These compositions were prepared in a Brabender mixer according to the procedure of Example 1. The impact strengths and their percent improvement over the corresponding comparative controls without the graft copolymer are given in Table VII and show that other Group IIa carbonate fillers can be effectively compatibilized to give reinforced composites.

TABLE VII
(Examples 26 and 27)

| Example | Description | Tensile impact | | | | |
|---|---|---|---|---|---|---|
| | | With compatibilizer | | No compatibilizer | | |
| | | (ft.lb./in²) | (Expressed in terms of kJ/m²) | (ft.lb./in²) | (Expressed in terms of kJ/m²) | % Improvement |
| 26 | 40 parts $MgCO_3$ | 29 | 61 | 21 | 44 | 38 |
| 27 | 40 parts $BaCO_3$ | 61 | 128 | 25 | 53 | 144 |

The amount of graft copolymer compatibilizer used to make these molding and extrusion compositions depends upon the concentration of filler, the filler particle size and the amount of monomer grafted onto the polyolefin backbone. In the following Examples 28—39, the effect of filler particle size on impact strength is examined.

Examples 28—39

In these Examples the concentration of $CaCO_3$ is fixed at 40% by weight. The graft copolymer, the HDPE and the method of preparation are identical to Example 1. Examples 28—31 employed a ground $CaCO_3$ with d=5.5 µm. Examples 32—35 used a ground $CaCO_3$ with a d=2.5 µm. Examples 36—39 used a ground $CaCO_3$ with d=1.8 µm.

The compositions and their tensile impact strengths are given in Table VIII. Note that less compatibilizer by weight is required to show the onset of impact reinforcement and to reach the impact plateau when the particle size is larger. Conversely, the plateau impact range increases as the particle size decreases. Obviously, the amount of compatibilzer required to reach the plateau impact range for a given filler is proportional to the filler concentration.

TABLE VIII
(Examples 28—39)

| Example | Avg. $CaCO_3$ particle diameter (µm) | HDPE % | Compatibilizer % | Weight % compatibilizer to $CaCO_3$ | Tensile impact (ft.lb./in²) | Tensile impact (Expressed in terms of kJ/m²) |
|---|---|---|---|---|---|---|
| 28 | 5.5 | 60.0 | 0 | 0 | 25 | 53 |
| 29 | 5.5 | 59.0 | 1.0 | 2.5 | 52 | 109 |
| 30 | 5.5 | 58.0 | 2.0 | 5.0 | 61 | 128 |
| 31 | 5.5 | 55.0 | 5.0 | 12.5 | 62 | 130 |
| 32 | 2.5 | 60.0 | 0 | 0 | 23 | 48 |
| 33 | 2.5 | 58.75 | 1.25 | 3.1 | 31 | 65 |
| 34 | 2.5 | 57.5 | 2.50 | 6.3 | 64 | 134 |
| 35 | 2.5 | 55.0 | 5.00 | 12.5 | 69 | 145 |
| 36 | 1.8 | 60.0 | 0 | 0 | 20 | 42 |
| 37 | 1.8 | 58.0 | 2.0 | 5.0 | 36 | 76 |
| 38 | 1.8 | 56.0 | 4.0 | 10.0 | 76 | 160 |
| 39 | 1.8 | 54.0 | 6.0 | 15.0 | 88 | 185 |

Examples 40—42

These Examples describe compositions containing 40% $CaCO_3$ (d=1.8 µm) with increasing amounts of the compatibilizer of Example 1 replacing the HDPE of Example 1. The data given in Table IX show little additional improvement in impact strength beyond about 12.5% compatibilizer based on the weight of $CaCO_3$. However, the stiffness (flexural modulus) decreases with further additions of compatibilizer while the composition cost increases.

TABLE IX
(Examples 40—42)

| Example | HDPE % | Compatibi- lizer % | Weight % compatibi- lizer to CaCO<sub>3</sub> | Tensile impact | | Flexural modulus | |
|---|---|---|---|---|---|---|---|
| | | | | (ft.lb./in$^2$) | (Expressed in terms of kJ/m$^2$) | (kpsi) | (Expressed in terms of N/mm$^2$) |
| 36 | 60 | 0 | 0 | 20 | 42 | 362 | 2496 |
| 40 | 55 | 5 | 12.5 | 82 | 172 | 332 | 2289 |
| 41 | 50 | 10 | 25.0 | 85 | 179 | 325 | 2241 |
| 42 | 40 | 20 | 50.0 | 93 | 195 | 311 | 2144 |

# EP 0 171 513 B1

It is an object of this invention to maximize composition strength while maintaining high stiffness. Using this consideration and other factors described above, namely that the concentration of graft copolymer compatibilizer depends upon the filler concentration, filler particle size and the concentration of grafted anhydride groups, the preferred compatibilizer concentration range is from about 1% to 25% by weight based upon the weight of Group IIa metal carbonates.

All parts and percentages herein are by weight unless indicated otherwise.

The foregoing detailed description is given for clearness of understanding only, and no unnecessary limitations are to be inferred therefrom, as modifications within the scope of the invention will be apparent to those skilled in the art.

Glossary of terms

A summarizing list of the abbreviations used herein to identify chemical ingredients is as follows:

HDPE—high density polyethylene

KRTTS—trademark (Kenrich) for isopropyl triisostearyl titanate

LDPE—low density polyethylene

LLDPE—linear low density polyethylene

XMNA—x - methylbicyclo(2.2.1)hept - 5 - ene - 2,3 - dicarboxylic acid anhydride

## Claims

1. A polyolefin composition comprising a blend of:
(a) a polyolefin matrix resin;
(b) a filler comprising particles of a Group IIa metal carbonate dispersed substantially uniformly throughout said blend; and
(c) a graft copolymer comprising 70—99.999 wt.% of a polyolefin backbone and, correspondingly, 30—0.001 wt.% of at least one monomer selected from the group consisting of ethylenically unsaturated carboxylic acids, acid anhydrides or derivatives thereof, wherein said blend is substantially free of a nucleating agent.

2. The composition of claim 1 wherein said filler of (b) comprises 80 wt.% or less of said blend.

3. The composition of claim 2 wherein said filler comprises 50 wt.% or less of said blend.

4. The composition of claim 2 wherein the weight of said graft copolymer of (c) in said blend is between 1 and 50 wt.% of the weight of said filler of (b).

5. The composition of claim 4 wherein the weight of said graft copolymer in said blend is 25 wt.% or less of the weight of said filler of (b).

6. The composition of claim 1 wherein said filler comprises one or more salts selected from the group consisting of CaCO₃, MgCO₃ and BaCO₃.

7. The composition of claim 1 wherein said polyolefin matrix resin of (a) is a homopolymer or copolymer of an olefin.

8. The composition of claim 7 wherein said polyolefin matrix resin of (a) is a propylene polymer.

9. The composition of claim 7 wherein said polyolefin matrix resin of (a) is a high density ethylene polymer.

10. The composition of claim 9 wherein said density is at least 0.94 g/ml.

11. The composition of claim 1 wherein said polyolefin backbone of the graft copolymer of (c) is selected from ethylene homopolymers and copolymers of ethylene and other olefins.

12. The composition of claim 11 wherein said backbone is a high density polyethylene homopolymer.

13. The composition of claim 12 wherein said density is at least 0.94 g/ml.

14. The composition of claim 1 wherein said monomer of (c) is selected from the group consisting of fumaric acid, maleic acid, maleic anhydride, 4 - methylcyclohex - 4 - ene - 1,2 - dicarboxylic acid anhydride, bicyclo(2.2.2)oct - 5 - ene - 2,3 - dicarboxylic acid anhydride, 1,2,3,4,5,8,9,10 - octahydronaphthalene - 2,3 - dicarboxylic acid anhydride, 2 - oxa - 1,3 - diketospiro(4.4)non - 7 - ene, bicyclo(2.2.1)hept - 5 - ene - 2,3 - dicarboxylic acid anhydride, maleopimaric acid, tetrahydrophthalic anhydride and x - methylbicyclo(2.2.1)hept - 5 - ene - 2,3 - dicarboxylic acid anhydride.

15. The composition of claim 1 wherein said graft copolymer of (c) comprises 70—99.5 wt.% of said polyolefin backbone and, correspondingly, 30—0.5 wt.% of said monomer.

16. A polyolefin composition comprising a blend of:
(a) a polyolefin matrix resin selected from the group consisting of polypropylene and high density polyethylene;
(b) up to 80 wt.% based on the total weight of said blend of a filler comprising particles of a Group IIa metal carbonate dispersed substantially uniformly throughout said blend; and
(c) between 1 and 50 wt.%, based on the weight of said filler, of a graft copolymer comprising 70—99.5 wt.% of a high density polyethylene backbone and, correspondingly, 30—0.5 wt.% of at least one monomer selected from the group consisting of ethylenically unsaturated carboxylic acids, acid anhydrides or derivatives thereof, wherein said blend is substantially free of a nucleating agent.

17. The composition of claim 16 wherein said filler comprises 50 wt.% or less of said blend.

11

18. The composition of claim 16 wherein the weight of said graft copolymer in said blend is 25 wt.% or less of the weight of said filler.

19. The composition of claim 16 wherein said filler comprises one or more salts selected from the group consisting of $CaCO_3$, $MgCO_3$ and $BaCO_3$.

20. The composition of claim 16 wherein said matrix resin of (a) comprises an ethylene polymer having a density of at least 0.94 g/ml.

21. The composition of claim 16 wherein said backbone of (c) has a density of at least 0.94 g/ml.

22. The composition of claim 16 wherein said monomer of (c) is selected from the group consisting of fumaric acid, maleic acid, maleic anhydride, 4 - methylcyclohex - 4 - ene - 1,2 - dicarboxylic acid anhydride, bicyclo(2.2.2)oct - 5 - ene - 2,3 - dicarboxylic acid anhydride, 1,2,3,4,5,8,9,10 - octahydronaphthalene - 2,3 - dicarboxylic acid anhydride, 2 - oxa - 1,3 - diketospiro(4.4)non - 7 - ene, bicyclo(2.2.1)hept - 5 - ene - 2,3 - dicarboxylic acid anhydride, maleopimaric acid, tetrahydrophthalic anhydride and x - methylbicyclo(2.2.1)hept - 5 - ene - 2,3 - dicarboxylic acid anhydride.

23. The composition of claim 16 wherein said graft copolymer of (c) comprises 70—99.5 wt.% of said polyolefin backbone and, correspondingly, 30—0.5 wt.% of said monomer.

## Patentansprüche

1. Polyolefin-Zusammensetzung bestehend aus einer Mischung:

(a) ein Polyolefin-Matrixharz;

(b) ein Füllstoff mit Partikeln eines Gruppe IIa Metallcarbonats, das im wesentlichen gleichmäßig überall in der Mischung dispergiert ist; und

(c) ein Pfropf-Copolymer mit 70—99,999 Gew.% eines Polyolefin-Rückgrates und entsprechend 30—0,001 Gew.% wenigstens eines Monomers, ausgewählt aus der Gruppe, die aus ethylenisch ungesättigten Carbonsäuren, Säureanhydriden oder ihren Derivaten besteht, wobei die Mischung im wesentlichen frei von einem Keimbildner ist.

2. Zusammensetzung gemäß Anspruch 1, bei der der Füllstoff (b) zu 80 Gew.% oder weniger in der Mischung enthalten ist.

3. Zusamennsetzung gemäß Anspruch 2, bei der der Füllstoff zu 50 Gew.% oder weniger in der Mischung enthalten ist.

4. Zusammensetzung gemäß Anspruch 2, bei der das Gewicht des Pfropf-Copolymers (c) in der Mischung zwischen 1 und 50 Gew.-% des Gewichtes des Füllstoffes (b) beträgt.

5. Zusammensetzung gemäß Anspruch 4, bei der das Gewicht des Pfropf-Copolymers in der Mischung 25 Gew.% oder weniger des Gewichts des Füllstoffes (b) beträgt.

6. Zusammensetzung gemäß Anspruch 1, bei der der Füllstoff ein oder mehrere Salze enthält, die aus der Gruppe, bestehend aus $CaCO_3$, $MgCO_3$ und $BaCO_3$ ausgewählt sind.

7. Zusammensetzung gemäß Anspruch 1, bei der das Polyolefin-Matrixharz (a) ein Homopolymer oder ein Copolymer eines Olefins ist.

8. Zusammensetzung gemäß Anspruch 7, bei der das Polyolefin-Matrixharz (a) ein Propylen-Polymer ist.

9. Zusammensetzung gemäß Anspruch 7, bei der das Polyolefin-Matrixharz (a) ein Ethylenpolymer mit hoher Dichte ist.

10. Zusammensetzung gemäß Anspruch 9, bei der die Dichte wenigstens 0,94 g/ml ist.

11. Zusammensetzung gemäß Anspruch 1, bei der das Polyolefin-Rückgrat des Pfropf-Copolymers (c) ausgewählt ist aus Ethylen-Homopolymeren und Ethylen-Copolymeren und anderen Olefinen.

12. Zusammensetzung gemäß Anspruch 11, bei der das Rückgrat ein Polyethylen-Homopolymer mit hocher Dichte ist.

13. Zusammensetzung gemäß Anspruch 12, bei der die Dichte wenigstens 0,94 g/ml ist.

14. Zusammensetzung gemäß Anspruch 1, bei der das Monomer von (c) ausgewählt ist aus der Gruppe, die aus Fumarsäure, Maleinsäure, Maleinsäureanhydrid, 4 - Methyl - cyclohex - 4 - en - 1,2 - dicarbonsäureanhydrid, Bicyclo(2.2.2)oct - 5 - en - 2,3 - dicarbonsäureanhydrid, 1,2,3,4,5,8,9,10 - Octahydronaphtalin - 2,3 - dicarbonsäureanhydrid, 2 - Oxa - 1,3 - diketospiro - (4.4)non - 7 - en, Bicyclo(2.2.1)hept - 5 - en - 2,3 - dicarbonsäureanhydrid, Maleopimarsäure, Tetrahydrophtalsäureanhydrid und x - Methylbicyclo(2.2.1)hept - 5 - en - 2,3 - dicarbonsäureanhydrid besteht.

15. Zusammensetzung gemäß Anspruch 1, bei der das Pfropf-Copolymer (c) 70—99,5 Gew.% des Polyolefin-Rückgrates und, entsprechend 30—0,5 Gew.% des Monomers enthält.

16. Polyolefin-Zusammensetzung bestehend aus einer Mischung:

(a) ein Polyolefin-Matrixharz, ausgewählt aus der Gruppe, die aus Polypropylen und Polyethylen mit hoher Dichte besteht;

(b) bis zu 80 Gew.% basierend auf dem gesamten Gewicht der Mischung, eines Füllstoffes mit Partikeln eines Gruppe IIa Metallcarbonats, das im wesentlichen gleichmäßig überall in der Mischung dispergiert ist; und

(c) zwischen 1 und 50 Gew.-%, basierend auf dem Gewicht des Füllstoffes, eines Pfropf-Copolymers mit 70 bis 99,5 Gew.% eines Polyethylen - Rückgrates mit hoher Dichte und, entsprechend 30—0,5 Gew.% wenigstens eines Monomers, ausgewählt aus der Gruppe, die aus ethylenisch ungesättigten Carbon-

EP 0 171 513 B1

säuren, Säureanhydriden oder deren Derivaten, besteht, wobei die Mischung im wesentlichen frei von einem Keimbildner ist.

17. Zusammensetzung gemäß Anspruch 16, bei der der Füllstoff 50 Gew.% oder weniger in der Mischung enthalten ist.

18. Zusammensetzung gemäß Anspruch 16, bei der das Gewicht des Pfropf-Copolymers in der Mischung 25 Gew.% oder weniger des Gewichts des Füllstoffes beträgt.

19. Zusammensetzung gemäß Anspruch 16, bei der der Füllstoff ein oder mehrere Salze enthält, die aus der Gruppe, bestehend aus CaCO$_3$, MgCO$_3$ und BaCO$_3$ ausgewählt ist.

20. Zusammensetzung gemäß Anspruch 16, bei der das Matrixharz (a) ein Ethylenpolymer mit einer Dichte von wenigstens 0,94 g/ml enthält.

21. Zusammensetzung gemäß Anspruch 16, bei der das Rückgrat von (c) eine Dichte von wenigstens 0,94 g/ml aufweist.

22. Zusammensetzung gemäß Anspruch 16, bei der das Monomer von (c) ausgewählt ist aus der Gruppe, die aus Fumarsäure, Maleinsäure, Maleinsäureanhydrid, 4 - Methyl - cyclohex - 4 - en - 1,2 - dicarbonsäureanhydrid, Bicyclo(2.2.2)oct - 5 - en - 2,3 - dicarbonsäureanhydrid, 1,2,3,4,5,8,9,10 - Octahydronaphtalin - 2,3 - dicarbonsäureanhydrid, 2 - Oxa - 1,3 - diketospiro(4.4)non - 7 - en, Bi-cyclo(2.2.1)hept - 5 - en - 2,3 - dicarbonsäureanhydrid, Maleopimarsäure, Tetrahydrophtalsäureanydrid und x - Methylbicyclo(2.2.1)hept - 5 - en - 2,3 - dicarbonsäureanhydrid besteht.

23. Zusammensetzung gemäß Anspruch 16, bei der das Pfropf-Copolymer (c) 70—99,5 Gew.% des Polyolefin-Rückgrates und, entsprechend 30—0,5 Gew.% des Monomers enthält.

**Revendications**

1. Composition polyoléfinique, comprenant un mélange:
(a) d'une matrice formée d'une résine polyoléfinique;
(b) d'une charge comprenant des particules d'un carbonate de métal du Groupe IIa en dispersion essentiellement uniforme dans ledit mélange; et
(c) d'un copolymère greffé comprenant 70 à 99,999% en poids d'un squelette polyoléfinique et, en proportion correspondante, 30 à 0,001% en poids d'au moins un monomère choisi dans le groupe constitué d'acides carboxyliques à non-saturation éthylénique, de leurs anhydrides ou de leurs dérivés, ledit mélange étant principalement dépourvu d'agent de nucléation.

2. Composition suivant la revendication 1, dans laquelle la charge de (b) constitue 80% en poids ou moins dudit mélange.

3. Composition suivant la revendication 2, dans laquelle la charge constitue 50% en poids ou moins dudit mélange.

4. Composition suivant la revendication 2, dans laquelle le poids dudit copolymère greffé de (c) dans ledit mélange se situe entre 1 et 50% en poids par rapport au poids de ladite charge de (b).

5. Composition suivant la revendication 4, dans laquelle le poids du copolymère greffé dans ledit mélange est de 25% en poids ou moins par rapport au poids de ladite charge de (b).

6. Composition suivant la revendication 1, dans laquelle la charge comprend un ou plusieurs sels choisis dans le groupe constitué de CaCO$_3$, MgCO$_3$ et BaCO$_3$.

7. Composition suivant la revendication 1, dans laquelle la résine polyoléfinique formant la matrice de (a) est un homopolymère ou un copolymère d'une oléfine.

8. Composition suivant la revendication 7, dans laquelle la résine polyoléfinique constituant la matrice de (a) est un polymère de propylène.

9. Composition suivant la revendication 7, dans laquelle la résiné polyoléfinique formant la matrice de (a) est un polymère d'éthylène haute densité.

10. Composition suivant la revendication 9, dans laquelle la densité correspond à une masse volumique d'au moins 0,94 g/ml.

11. Composition suivant la revendication 1, dans laquelle le squelette polyoléfinique du copolymère greffé de (c) est choisi entre des homopolymères d'éthylène et des copolymères d'éthylène et d'autres oléfines.

12. Composition suivant la revendication 11, dans laquelle le squelette est un homopolymère polyéthylénique haute densité.

13. Composition suivant la revendication 12, dans laquelle la densité correspond à une masse volumique d'au moins 0,94 g/ml.

14. Composition suivant la revendication 1, dans laquelle le monomère de (c) est choisi dans le groupe comprenant l'acide fumarique, l'acide maléique, l'anhydride maléique, l'anhydride d'acide 4 - méthyl-cyclohex - 4 - ène - 1,2 - dicarboxylique, l'anhydride d'acide bicyclo(2.2.2)oct - 5 - ène - 2,3 - dicarboxylique, l'anhydride d'acide 1,2,3,4,5,8,9,10 - octahydronaphtalène - 2,3 - dicarboxylique, le 2 - oxa - 1,3 - (dicétospiro(4.4)non - 7 - ène, l'anhydride d'acide bicyclo(2.2.1)hept - 5 - ène - 2,3 - dicarboxylique, l'acide maléopimarique, l'anhydride tétrahydrophtalique et l'anhydride d'acide x - méthylbicyclo(2.2.1)hept - 5 - ène - 2,3 - dicarboxylique.

15. Composition suivant la revendication 1, dans laquelle le copolymère greffé de (c) constitue 70 à

13

99,5% en poids dudit squelette polyoléfinique avec, de façon correspondante, 30 à 0,5% en poids dudit monomère.

16. Composition polyoléfinique comprenant un mélange:

(a) d'une résine polyoléfinique servant de matrice, choisie dans le groupe comprenant le polypropylène et un polyéthylène haute densite;

(b) jusqu'à 80% en poids, sur la base du poids total dudit mélange, d'une charge comprenant des particules d'un carbonate de métal du Groupe IIa en dispersion essentiellement uniforme dans tout le mélange; et

(c) entre 1 et 50% en poids, sur la base du poids de ladite charge, d'un copolymère greffé comprenant 70 à 99,5% en poids d'un squelette de polyéthylène haute densité et, de façon correspondante, 30 à 0,5% en poids d'au moins un monomère choisi dans le groupe comprenant des acides carboxyliques à non-saturation éthylénique, leurs anhydrides d'acides ou leurs dérivés,

ledit mélange étant principalement dépourvu d'agent de nucléation.

17. Composition suivant la revendication 16, dans laquelle ladite charge constitue 50% en poids ou moins dudit mélange.

18. Composition suivant la revendication 16, dans laquelle le poids dudit copolymère greffé dans ledit mélange est égal à 25% en poids ou moins du poids de ladite charge.

19. Composition suivant la revendication 16, dans laquelle la charge comprend un ou plusieurs sels choisis dans le groupe formé de $CaCO_3$, $MgCO_3$ et $BaCO_3$.

20. Composition suivant la revendication 16, dans laquelle la résine formant la matrice de (a) comprend un polymère d'éthylène ayant une masse volumique d'au moins 0,94 g/ml.

21. Composition suivant la revendication 16, dans laquelle le squelette de (c) a une masse volumique d'au moins 0,94 g/ml.

22. Composition suivant la revendication 16, dans laquelle le monomère de (c) est choisi dans le groupe comprenant l'acide fumarique, l'acide maléique, l'anhydride maléique, l'anhydride d'acide 4 - méthylcyclohex - 4 - ène - 1,2 - dicarboxylique, l'anhydride d'acide bicyclo(2.2.2)oct - 5 - ène - 2,3 - dicarboxylique, l'anhydride d'acide 1,2,3,4,5,8,9,10 - octahydronaphtalène - 2,3 - dicarboxylique, le 2 - oxa - 1,3 - dicétospiro(4.4)non - 7 - ène, l'anhydride d'acide bicyclo(2.2.1)hept - 5 - ène - 2,3 - dicarboxylique, l'acide maléopimarique, l'anhydride tétrahydrophtalique et l'anhydride d'acide x - méthylbicyclo(2.2.1)hept - 5 - ène - 2,3 - dicarboxylique.

23. Composition suivant la revendication 16, dans laquelle le copolymère greffé de (c) constitue 70 à 99,5% en poids dudit squelette polyoléfinique avec, de façon correspondante, 30 à 0,5% en poids dudit monomère.